# FASCICULE DE BREVET EUROPEEN

(11) **EP 3 976 446 B1**
(45) Date de publication et mention de la délivrance du brevet: **21.06.2023**
(21) Numéro de dépôt: 20742312.0
(22) Date de dépôt: 30.05.2020
(51) Int. Cl.: B62D 31/00, B62D 47/00, B62D 61/12

(54) **VEHICULE AUTOMOBILE ELECTRIQUE AVEC SYSTEME D'IMBRICATION ENTRE PLUSIEURS VEHICULES SUCCESSIFS EN MODE DE PARCAGE**
ELEKTROFAHRZEUG MIT EINEM SYSTEM ZUM INEINANDER EINSCHIEBEN VON MEHREREN AUFEINANDERFOLGENDEN FAHRZEUGEN IN PARKPOSITION.
ELECTRICAL VEHICLE COMPRISING A NESTING SYSTEM OF SEVERAL SUCCESSIVE VEHICLES IN PARKING MODE

(30) Priorité: 31.05.2019 FR 1905800
(43) Date de publication de la demande: 06.04.2022
(73) Titulaire: Caron, Jean-Michel, 62400 Béthune (FR)
(72) Inventeur: Caron, Jean-Michel, 62400 Béthune (FR)
(74) Mandataire: RVDB
(86) Numéro de dépôt international: PCT/FR2020/050927
(87) Numéro de publication internationale: WO 2020/240145

(56) Documents cités:
- EP-A1- 0 816 210
- DE-A1-102015 213 118
- DE-C2- 4 410 725
- FR-A- 1 513 515
- FR-A1- 2 909 317
- FR-A1- 2 955 053
- FR-B1- 2 909 317
- US-A- 5 417 300
- US-A1- 2014 305 728
- US-B2- 9 567 020

## Description

### Domaine technique

La présente invention concerne le domaine des véhicules automobiles adaptés à un usage urbain ou périurbain, de tels véhicules ayant pour objectif de faciliter leur parcage en réduisant l'espace occupé en stationnement.

Le véhicule automobile selon l'invention sera prédisposé à un usage en flotte d'autopartage en libre-service, voire en flotte automobile pour les entreprises.

### Etat de la technique

Les véhicules automobiles sont nécessaires à de nombreuses personnes pour se rendre chaque jour sur leurs lieux de travail, soit parce que les moyens de transport en commun ne sont pas accessibles ou difficilement accessibles, soit en raison des horaires de travail non adaptés aux transports en commun, soit pour disposer d'une plus grande liberté de déplacement indépendamment des horaires. Ainsi, les foyers disposent généralement de deux véhicules automobiles, voire de plus de deux, ce qui engendre une augmentation incessante du nombre de véhicules automobiles et pose un problème majeur dans toutes les grandes villes en termes de stationnement et d'engorgement, ce à quoi s'ajoute la pollution due aux gaz d'échappement des véhicules automobiles à moteur thermique.

Pour pallier en partie ce problème de stationnement, de grands parkings aériens, en sous-sol ou couverts sont construits dans les centres villes, lesquels sont très coûteux en termes de construction et d'entretien pour les communes et aussi pour les usagers étant donné que ces parkings sont payants. Des parkings sont aussi construits en périphérie des grandes villes, avec un accès direct et à coûts réduits aux transports en commun, notamment au bus, au métro ou au tramway. Des parkings gratuits et éloignés des grandes villes existent également afin de promouvoir le covoiturage, permettant ainsi à plusieurs usagers de se donner rendez-vous sur un parking et d'effectuer un trajet en commun vers une même destination au moyen d'un seul véhicule automobile.

Le document FR 2 955 053 A1 divulgue un véhicule automobile destiné à être imbriqué à un autre véhicule similaire. Le document FR 2 955 053 A1 divulgue le préambule de la revendication 1.

Le déposant a également connaissance d'un concept de véhicule automobile décrit dans la demande de brevet DE102015213118. Ce véhicule automobile comporte une forme fuselée, avec un siège avant disposé en partie avant du véhicule et un siège arrière disposé en partie arrière dudit véhicule. En outre, le siège arrière est monté en suspension vis-à-vis du pavillon du véhicule et il est rabattable contre ce pavillon à l'intérieur de l'habitacle dudit véhicule, ce qui permet de libérer l'habitacle en partie arrière du véhicule automobile. Cette partie arrière comprend aussi un dégagement au sol, sans plancher, permettant de pénétrer la partie avant d'un premier véhicule dans la partie arrière d'un second véhicule disposé devant ledit premier véhicule. Ainsi, les véhicules peuvent être imbriqués successivement les uns dans les autres, ce qui réduit l'encombrement total desdits véhicules en position de stationnement. Cette conception de véhicule automobile décrite dans DE102015213118 offre cependant peu d'espace aux occupants dans l'habitacle du fait de la forme fuselée très prononcée et aussi peu d'espace de rangement pour transporter des bagages ou d'autres articles du fait de l'absence d'un plancher dans la partie arrière du véhicule.

### Résumé de l'invention

La présente invention a pour objectif de pallier ces inconvénients du véhicule automobile décrit dans DE102015213118. A cet effet, l'invention concerne un véhicule automobile électrique, lequel comprend une partie avant et une partie arrière, la partie avant étant fuselée par rapport à la partie arrière, ce qui contribue à faciliter l'imbrication de deux véhicules consécutifs. En outre, le véhicule comprend un châssis sur lequel sont montés un plancher et une carrosserie munie d'un pavillon et d'un hayon, le plancher et la carrosserie définissant un habitacle. Le véhicule comprend également un train avant agencé sur le châssis dans la partie avant du véhicule, le train avant comprenant au moins une roue directionnelle. Il est en effet possible de prévoir une ou deux roues directionnelles sur le train avant, sans sortir du cadre de l'invention. Le véhicule comprend aussi un train arrière agencé sur le châssis dans la partie arrière du véhicule et comprenant deux roues motrices disposées sur les côtés latéraux du châssis. S'agissant d'un véhicule électrique, l'homme du métier comprendra que les roues motrices sont entraînées en rotation par un ou deux moteurs électriques. Il est en effet possible de prévoir un seul moteur électrique entraînant en rotation les deux roues motrices par le biais d'un dispositif de transmission ou de prévoir deux moteurs électriques entraînant respectivement les deux roues motrices. Ce ou ces moteurs électriques sont alimentés au moyen d'un dispositif d'accumulation et de restitution d'une énergie électrique du type batterie.

Selon l'invention, le train avant comprend un dispositif de rabattement de l'au moins une roue directionnelle de sorte à réduire l'encombrement de la partie avant du véhicule. Par ailleurs, la partie arrière du véhicule comprend un dispositif d'ouverture configuré pour relever le hayon et le pavillon de sorte à accéder à l'arrière de l'habitacle tout en évasant celui-ci. En outre, ledit véhicule comprend au moins une pièce de guidage agencée sous l'extrémité avant du châssis et au moins un rail de guidage agencé sur le plancher dans ladite partie arrière, de sorte à permettre l'insertion de la partie avant d'un premier véhicule ayant son au moins une roue directionnelle en position rabattue, à l'intérieur de la partie arrière d'un second véhicule qui précède le premier véhicule et qui a son habitacle ouvert et évasé, et à permettre le guidage de l'au moins une pièce de guidage du premier véhicule dans l'au moins un rail de guidage du second véhicule durant ladite insertion. On entend par « rail de guidage agencé sur le plancher » le fait que le rail de guidage peut être posé sur le plancher et protubérant sur celui-ci ou, au contraire, peut être logé dans le plancher et à fleur de celui-ci.

Ainsi, selon l'invention, le véhicule permet de disposer d'un habitacle plus grand et d'un plancher s'étendant sur tout l'habitacle, sans contrevenir à l'imbrication entre deux véhicules étant donné la possibilité d'évaser cet habitacle sur la partie arrière du véhicule et la possibilité de réduire l'encombrement de la partie avant du véhicule suivant grâce au rabattement de l'au moins une roue du train avant. La présence de ce plancher dans la partie arrière du véhicule permet notamment de disposer d'un coffre pour le transport d'articles ou de bagages.

Selon une réalisation du véhicule objet de l'invention, le dispositif d'ouverture comprend un premier système de pivotement agencé sur la carrosserie au niveau d'un bord avant du pavillon de sorte à pouvoir incliner vers le haut ledit pavillon en relevant son bord arrière. En outre, ce dispositif d'ouverture comprend un second système de pivotement agencé entre le bord arrière du pavillon et un bord avant du hayon de sorte à pouvoir incliner vers le haut ledit hayon en relevant son bord arrière. En d'autres termes, le bord arrière du pavillon et le bord avant du hayon sont attenants et articulés entre eux grâce au second système de pivotement, ce qui permet d'ouvrir l'arrière de l'habitacle pour accéder à celui-ci et de déplacer le hayon dans le plan du pavillon voire au-dessus de celui-ci ; puis l'articulation du bord avant du pavillon sur la carrosserie - grâce au premier système de pivotement - permet d'augmenter la hauteur de l'habitacle et d'élever le pavillon et le hayon afin qu'ils ne soient pas un obstacle à la pénétration de la partie avant fuselée d'un véhicule suivant dans la partie arrière de l'habitacle du véhicule qui le précède.

Selon cette réalisation précitée du véhicule objet de l'invention, le dispositif d'ouverture comprend aussi un système d'actionnement configuré pour faire pivoter le hayon et le pavillon dans leurs positions relevées permettant l'accès à l'arrière de l'habitacle et son évasement et, inversement, pour les faire pivoter dans leurs positions abaissées permettant la fermeture de l'habitacle.

Selon cette réalisation précitée du véhicule objet de l'invention, le dispositif d'ouverture comprend des moyens d'étanchéité configurés pour protéger l'habitacle vis-à-vis de l'environnement externe lorsque le pavillon est incliné vers le haut. Cela permet notamment d'empêcher la pluie de pénétrer dans l'habitacle lorsque le véhicule reçoit un autre véhicule en mode de parcage desdits véhicules.

Selon l'invention, le véhicule comprend deux rétroviseurs agencés sur les côtés latéraux dudit véhicule. En outre, chacun des rétroviseurs est équipé d'un dispositif de rabattement du rétroviseur contre la carrosserie. On entend par rabattement la possibilité de rabattre les rétroviseurs contre la carrosserie, mais également la possibilité de les escamoter dans ladite carrosserie, l'objectif étant que lesdits rétroviseurs ne soient pas un obstacle à l'insertion de la partie avant du véhicule dans l'habitacle en partie arrière d'un véhicule qui précède.

Selon l'invention, le véhicule comprend au moins un siège avant et des premiers moyens d'escamotage de l'au moins un siège avant. Le véhicule comportera de préférence un ou deux sièges avant individuels. On pourrait aussi imaginer un siège avant du type banquette permettant à un conducteur et un passager de s'assoir sur le même siège. Selon une première réalisation, le véhicule comprend un tableau de bord et les premiers moyens d'escamotage comprennent un dispositif de déplacement de l'au moins un siège avant sous le tableau de bord. Selon une seconde réalisation, le plancher comprend un double-fond et les premiers moyens d'escamotage comprennent un dispositif de rabattement de l'au moins un siège avant à l'intérieur du double-fond du plancher.

Selon une réalisation du véhicule, outre la présence d'au moins un siège avant, celui-ci comprend au moins un siège arrière et des seconds moyens d'escamotage de l'au moins un siège arrière. De préférence, le véhicule comporte deux sièges arrière individuels de sorte à permettre le passage du rail de guidage entre les deux sièges arrière. Mais on pourrait prévoir un seul siège arrière du type banquette en adaptant en conséquence les seconds moyens d'escamotage et l'agencement du rail de guidage sur le plancher du véhicule. Selon une réalisation du véhicule, le plancher comprend un double-fond et les seconds moyens d'escamotage comprennent un dispositif de rabattement de l'au moins un siège arrière à l'intérieur du double-fond du plancher.

Selon une réalisation, le véhicule comprend un dispositif d'affaissement du plancher dans la partie arrière dudit véhicule de sorte à participer à l'évasement de l'arrière de l'habitacle ouvert et évasé. En d'autres termes, ce dispositif d'affaissement permet d'abaisser le plancher, ce qui participe également à l'augmentation de la hauteur de l'habitacle dans la partie arrière du véhicule afin de faciliter l'insertion de la partie avant d'un autre véhicule dans ledit habitacle, en mode de parcage des véhicules.

Selon l'invention, le véhicule comprend un premier dispositif de détection agencé sur la pièce de guidage de sorte à détecter l'engagement de ladite pièce de guidage sur un rail de guidage d'un véhicule précédent.

Selon l'invention, le véhicule comprend un second dispositif de détection configuré pour détecter l'approche entre deux véhicules successifs.

Selon l'invention, le véhicule comprend un système d'activation configuré pour générer une séquence d'imbrication ou de dégagement entre deux véhicules consécutifs.

### Brève description des figures

Les caractéristiques et avantages de l'invention apparaîtront à la lecture de la description suivante s'appuyant sur des figures, parmi lesquelles :
[Fig. 1] La figure 1 illustre une vue de côté de trois véhicules selon l'invention, lesquels sont imbriqués successivement les uns dans les autres en position de parcage ;
[Fig. 2] La figure 2 illustre une vue d'ensemble partielle d'un véhicule permettant de mettre en évidence certains des équipements du véhicule ;
[Fig. 3] La figure 3 illustre en vue de derrière un véhicule avec son hayon et son pavillon en positions relevées ;
[Fig. 4] La figure 4 illustre en vue de dessus le véhicule avec son hayon et son pavillon en positions relevées ;
[Fig. 5] La figure 5 illustre en vue de face le véhicule avec son hayon et son pavillon en positions relevées ;
[Fig. 6] La figure 6 illustre en vue de côté le véhicule avec son hayon et son pavillon en positions relevées ;
[Fig. 7] La figure 7 illustre en vue de face le véhicule avec son train avant ayant ses roues directionnelles rabattues ;

### Description détaillée

Dans la suite de la description, le terme véhicule désigne le véhicule automobile électrique objet de l'invention. Dans la présente description, les termes gauche, droit, avant et arrière sont définis en considération du sens normal de circulation du véhicule avançant sur une route, le conducteur assis sur son siège regardant vers l'avant.

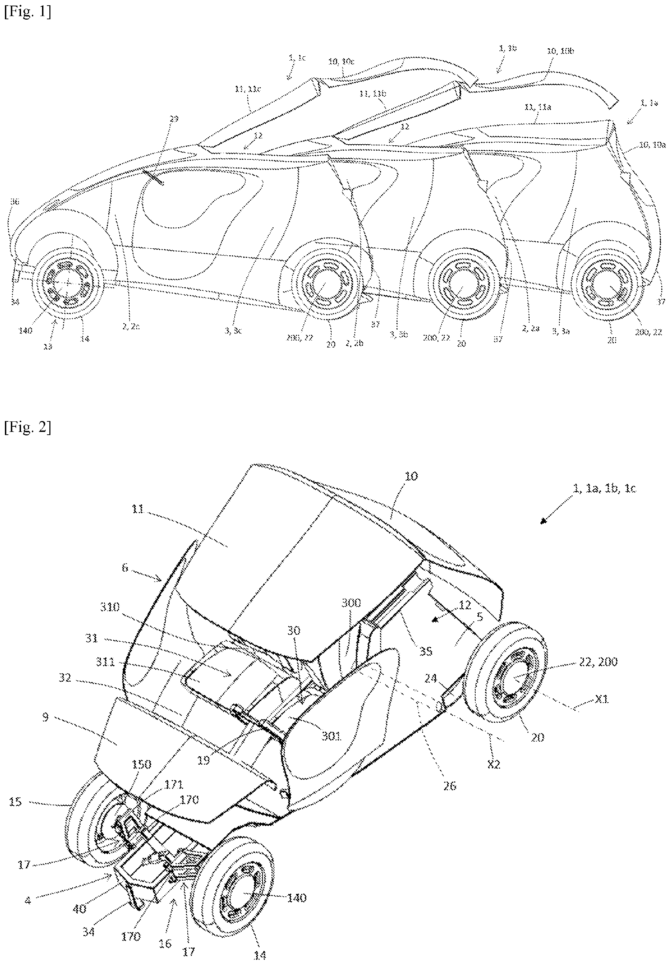

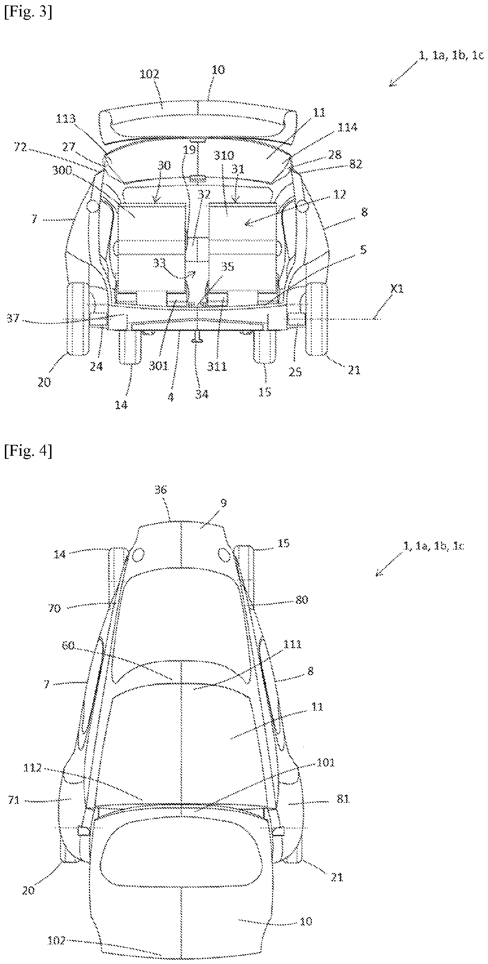

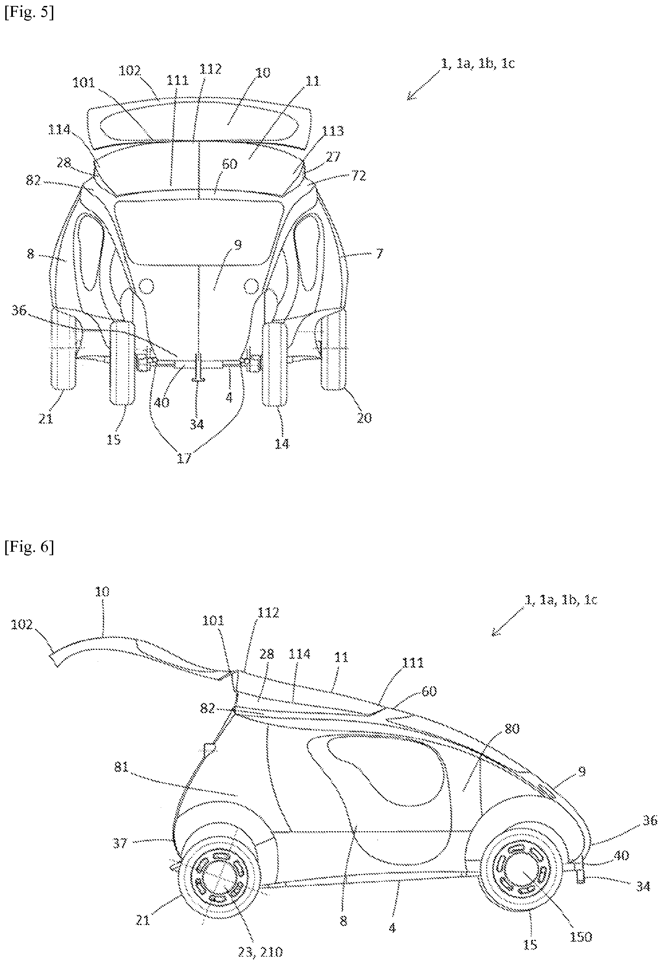

En regard des figures 1 à 6, le véhicule 1 comprend une partie avant 2 et une partie arrière 3, la partie avant 2 présentant une forme fuselée par rapport à la partie arrière 3. On entend par forme fuselée le fait que la partie avant 2 présente un rétrécissement en largeur et en hauteur par rapport à la partie arrière 3. Sur les figures 1 à 6, l'ensemble du véhicule 1 présente une forme fuselée, ledit véhicule 1 ayant une forme plus ou moins semi-elliptique ou trapézoïdale en vue de dessus, comme le montre la figure 4, et une forme plus ou moins de quart d'ellipse en vue de côté, comme le montre la figure 6. Cette forme fuselée participe à l'imbrication de la partie avant 2a, 2b d'un premier véhicule 1a, 1b dans la partie arrière 3b, 3c d'un second véhicule 1b, 1c disposé devant le premier véhicule 1a, 1b, comme cela apparaît sur la figure 1. Cette forme fuselée améliore en outre l'aérodynamisme du véhicule 1. Le véhicule 1 comprend un châssis 4 sur lequel sont montés un plancher 5 et une carrosserie 6. Cette carrosserie 6 comporte notamment une aile gauche 7, une aile droite 8, un capot 9 disposé à l'avant, un hayon 10 disposé à l'arrière et un pavillon 11 disposé au-dessus. Le plancher 5, les ailes gauche 7 et droite 8, le hayon 10 et le pavillon 11 définissent un habitacle 12.

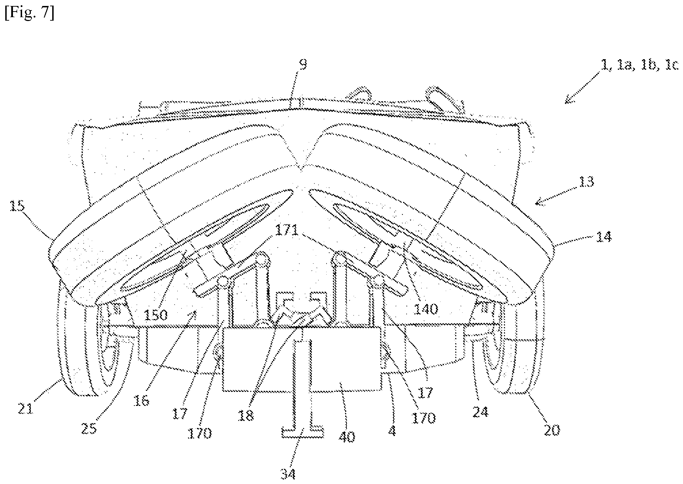

En regard notamment des figures 1, 2, 4 et 7, le véhicule 1 comprend dans sa partie avant 2 un train avant 13 qui est monté sur le châssis 4. Ce train avant 13 comprend deux roues avant14, 15 disposées sur les côtés latéraux du châssis 4 et dépassant respectivement de la partie avant 70 de l'aile gauche 7 et de la partie avant 80 de l'aile droite 8, lorsque ledit véhicule 1 est en condition normale de circulation voire lorsque ledit véhicule 1, 1c est disposé en tête de file en condition de parcage illustrée en figure 1. Le train avant 13 comprend un dispositif de rabattement 16 des deux roues avant 14,15 permettant de les escamoter dans le volume de la carrosserie 6, sous le capot 9 disposé en position relevée, comme l'illustre les figures 2 et 7. Ce dispositif de rabattement 16 comprend, pour chacune des deux roues avant 14, 15, un triangle de suspension 17 qui est articulé à une première extrémité 170 sur le châssis 4 et actionné au moyen d'un vérin 18 pour passer de la position déployée illustrée en figure 2 à la position rabattue illustrée en figure 7, et inversement. Ce triangle de suspension 17 a une seconde extrémité 171 qui reçoit le moyeu 140, 150 de la roue avant 14, 15. Lorsque les roues avant 14, 15 sont dans la position rabattue illustrée en figure 7, l'encombrement de la partie avant 2 du véhicule 1 est réduit, ce qui favorise son introduction dans l'habitacle 12, en partie arrière 3 d'un véhicule 1 qui précède. Ces deux roues avant 14, 15 sont directionnelles, celles-ci pouvant changer d'angle de direction en actionnant le volant 19 du véhicule 1 par le biais d'un mécanisme directionnel (non illustré) agencé entre les roues avant 14, 15 et le volant 19, comme cela existe déjà sur des véhicules traditionnels. En variante, le véhicule 1 selon l'invention pourrait comporter une seule roue avant directionnelle au lieu desdites deux roues avant 14, 15 directionnelles.

En regard des figures 1 à 7, le véhicule 1 comprend deux roues arrière 20, 21 qui sont motrices, ces roues arrière 20, 21 étant entraînées en rotation respectivement par deux moteurs électriques 22, 23 qui sont synchronisés et disposés au niveau des moyeux 200, 210 desdites roues arrière 20, 21. Ces moteurs électriques 22, 23 sont alimentés en électricités par des accumulateurs (non illustrés) logés dans un coffre (non illustré) du plancher 5 qui dispose pour cela d'un double-fond (non illustré). Ces roues arrière 20, 21 sont disposées sur les côtés latéraux du châssis 4, respectivement au niveau de la partie arrière 71 de l'aile gauche 7 et de la partie arrière 81 de l'aile droite 8 et en dehors de l'habitacle 12, comme cela apparaît sur la figure 3. Les roues arrière 20, 21 sont montées en rotation d'axe X1 sur des bras de suspension 24, 25 qui sont eux-mêmes articulés en rotation d'axe X2 sur un arbre transversal 26 (illustré en traits-tirés sur la figure 2) fixé au châssis 4, lesdits axes X1 et X2 étant parallèles et décalés l'un par rapport à l'autre, des actionneurs du type vérin électrique (non illustrés) permettant de faire pivoter selon l'axe X2 les bras de suspension 24, 25 vis-à-vis de l'arbre transversal 26, ledit pivotement permettant de réaliser un affaissement de l'assiette arrière du véhicule 1 et, ainsi, du plancher 5 vis-à-vis des roues arrière 20, 21 qui reposent sur le sol.

En regard des figures 1 à 6, le bord avant 111 du pavillon 11 est monté à pivotement vis-à-vis de la partie supérieure avant 60 sur la carrosserie 6, par exemple au moyen de charnières (non illustrées), ce qui permet de déplacer le pavillon 11 d'une position fermée illustrée sur la figure 1 pour le premier véhicule 1a, vers une position ouverte illustrée en figures 2 à 6 selon laquelle le pavillon 11 est relevé ou ouvert, c'est-à-dire incliné vers le haut avec le bord arrière 112 du pavillon 11 relevé, ce qui permet d'augmenter la hauteur de l'habitacle 12 dans la partie arrière 3 du véhicule 1. Le bord arrière 112 du pavillon 11 et le bord avant 101 du hayon 10 sont attenants et articulés entre eux au moyen de charnières (non illustrées), ce qui permet de déplacer le hayon 10 d'une position fermée illustrée sur la figure 1 pour le premier véhicule 1a, vers une position ouverte illustrée sur les figures 2 à 6 selon laquelle le hayon 10 est plus ou moins dans un même plan que le pavillon 11, voire plus incliné vers le haut, et à son bord arrière 102 qui est relevé. En fonctionnement normal du véhicule 1, lorsque le pavillon 11 est en position fermée, le hayon 10 peut être déplacer de la position fermée vers la position ouverte et inversement, afin d'accéder à l'habitacle 12 du véhicule 1 et de pouvoir ranger des articles ou des bagages sur le plancher 5, comme avec un coffre d'une voiture traditionnelle. Lorsque le pavillon 11 et le hayon 10 sont tous les deux en position ouverte ou relevée, l'habitacle 12 est plus haut et complètement accessible, ce qui permet d'insérer dans la partie arrière 3b, 3c du véhicule 1b, 1c, la partie avant 2a, 2b du véhicule 1a, 1b disposé à l'arrière de celui-ci et ayant son train avant 13 avec ses roues avant 14, 15 en position rabattue. On remarque notamment en regard des figures 3 et 5 que le pavillon 11 comprend des parois latérales 27, 28 voire des soufflets qui assurent le maintien fermé entre les bords latéraux 113, 114 du pavillon 11 et les bords supérieurs 72, 82 des ailes gauche et droite 7, 8 de la carrosserie 6, ce qui empêche notamment la pénétration de l'eau par les côtés latéraux du pavillon 11 en position ouverte ou relevée. L'actionnement du hayon 10 et du pavillon 11 pour passer dans la position ouverte ou relevée et, inversement, dans la position fermée est de préférence synchronisé avec l'actionnement de l'affaissement du plancher 5. On prévoit pour cela des câbles, tringleries et poulies (non illustrés), les câbles étant reliés aux bras de suspension 24, 25, le pivotement desdits bras de suspension 24, 25 sous l'action des vérins électriques (non illustrés) assurant le pivotement du pavillon 11 et du hayon 10. On pourrait en variante prévoir directement des vérins électriques (non illustrés) qui actionnent directement le pivotement du pavillon 11 et du hayon 10, de manière synchronisée ou non avec l'activation des vérins électriques (non illustrés) actionnant lesdits bras de suspension 24, 25.

Le véhicule 1 comprend des rétroviseurs extérieurs 29 (un seul illustré du côté gauche sur la figure 1 pour le véhicule 1c) sur les parties avant 70, 80 des ailes gauche 7 et droite 8. Ces rétroviseurs extérieurs 29 sont rabattables contre les ailes gauche 7 et droite 8, par exemple en utilisant des mécanismes de rabattement des rétroviseurs tels que ceux existant sur les véhicules traditionnels. On pourrait aussi prévoir des rétroviseurs extérieurs 29 escamotables dans la carrosserie 6. Le rabattement de ces rétroviseurs extérieurs 29 réduit l'encombrement de la partie avant 2 du véhicule 1 en sorte de faciliter son introduction dans l'habitacle 12, en partie arrière 3 d'un véhicule 1 qui précède.

En regard des figures 2 et 3, le véhicule 1 comprend deux sièges avant 30, 31, un pour le conducteur et un pour un passager. Le véhicule 1 comprend aussi un volant 19 disposé du côté gauche du véhicule, ledit volant 19 pouvant toutefois être à droite, selon le sens de circulation et les normes en vigueur dans le pays de commercialisation dudit véhicule 1. Le véhicule 1 comprend aussi un tableau de bord 32. Les sièges avant 30, 31 sont montés sur des glissières (non illustrées) sur le plancher 5 et leur dossier 300, 310 peut être rabattu contre l'assise 301, 311 de sorte que, dans une position rabattue, lesdits sièges 30, 31 peuvent venir se loger dans l'espace 33 réservé aux jambes du conducteur et du passager, sous le tableau de bord 32. Le dispositif de déplacement des sièges avant 30, 31 pourra comporter des caractéristiques semblables aux dispositifs de réglage des sièges électriques existant sur les véhicules traditionnels. On peut aussi prévoir un dispositif de réglage du volant 19 comme cela existe déjà sur des véhicules traditionnels pour adapter la position du volant 19 en fonction de la morphologie du conducteur, ledit dispositif de réglage du volant 19 étant ici utilisé aussi pour faciliter le positionnement du siège 30 du conducteur en position rabattue, dans l'espace 33 en-dessous du tableau de bord 32. Dans une variante, le véhicule 1 peut comporter des sièges avant 30, 31 escamotables dans un coffre (non illustré) du plancher 5 qui dispose pour cela d'un double-fond. Le véhicule 1 peut aussi comporter des sièges arrière (non illustrés) qui seront, dans ce cas, escamotables dans un coffre (non illustré) du plancher 5 de sorte à dégager l'habitacle 12 dans la partie arrière 3 du véhicule 1.

En regard des figures 1, 2, 3, 5, 6 et 7, le véhicule 1 comprend à l'extrémité avant 40 de son châssis 4, sous ledit châssis 4, une pièce de guidage 34. En outre, le plancher 5 comporte un rail de guidage 35 qui s'étend dans le sens de la longueur dans la partie arrière 3 du véhicule 1. Ce rail de guidage 35 est de préférence disposé à fleur du plancher 5. Lorsque le hayon 10 et le pavillon 11 sont en position ouverte ou relevée, le rail de guidage 35 est accessible et peut recevoir la pièce de guidage 34 d'un véhicule en approche par l'arrière. Dans l'exemple décrit ici, l'engagement de la pièce de guidage 34 dans le rail de guidage 35 d'un véhicule 1 qui précède nécessite au préalable l'affaissement du plancher 5 dudit véhicule 1 précédent, tel que précisé précédemment, en sorte de faire correspondre la pièce de guidage 34 d'un premier véhicule 1a, 1b avec le rail de guidage 35 d'un second véhicule 1b, 1c disposé devant. Un capteur de position (non illustré) présent sur la pièce de guidage 34 permet de détecter son engagement sur le rail de guidage 35 du véhicule 1b, 1c disposé devant. Une fois la pièce de guidage 34 du premier véhicule 1a, 1b engagée dans le rail de guidage 35 du second véhicule 1b, 1c disposé devant, les roues avant 14, 15 du train avant 13 dudit premier véhicule 1a, 1b peuvent être rabattues, de même que les rétroviseurs 29, puis les moteurs électriques 22, 23 des roues arrières 20, 21 sont actionnés pour faire avancer la partie avant 2a, 2b dudit premier véhicule 1a, 1b dans la partie arrière 1b, 1c du second véhicule 1b, 1c disposé devant, la pièce de guidage 34 du premier véhicule 1a, 1b coulissant alors dans le rail de guidage 35 du second véhicule 1b, 1c jusqu'à venir en butée au bout dudit rail de guidage 35. La pièce de guidage 34 comporte un capteur de fin de course (non illustré) qui est actionné lorsque ladite pièce de guidage 34 arrive en butée dans le bout du rail de guidage 35, ce qui coupe l'actionnement des moteurs 22, 23 des roues arrière 20, 21, finalisant ainsi l'imbrication entre le premier véhicule 1a, 1b et le second véhicule 1b, 1c.

Le véhicule 1 comprend aussi des capteurs de position (non illustrés) agencés notamment sur le pare-chocs avant 36 et sur le pare-chocs arrière 37, lesquels permettent de détecter la phase d'approche entre deux véhicules 1a, 1b et 1b, 1c durant leur imbrication, afin de coordonner l'affaissement du plancher 5, l'ouverture du hayon 10 et du pavillon 11 et l'effacement des sièges avant 30, 31 et éventuellement des sièges arrière (non illustrés) sur le véhicule 1b, 1c disposé à l'avant, et de permettre ensuite au véhicule 1a, 1b disposée derrière d'avancer jusqu'à ce que sa pièce de guidage 34 s'engage dans le rail de guidage 35 du véhicule 1b, 1c de devant, ce qui active ensuite la phase de rabattement des roues avant 14, 15 et des rétroviseurs 29 sur le véhicule 1a, 1b disposé derrière et, ensuite, la phase d'imbrication de la partie avant 2a, 2b du véhicule 1a, 1b de derrière à l'intérieur de l'habitacle 12 dans la partie arrière 3b, 3c du véhicule 1b, 1c de devant. Le véhicule 1 dispose pour cela d'une carte mémoire (non illustrée) programmée pour lancer la séquence d'activation des différents actionneurs de deux véhicules 1a, 1b ou 1b, 1c en approche afin de réaliser l'imbrication desdits deux véhicules pour leur parcage. Et inversement lors du dégagement d'un premier véhicule 1a vis-à-vis des autres véhicules 1b, 1c qui restent imbriqués en position de parcage. Pour cela, les cartes mémoires des véhicules en approche récupèrent les données des divers capteurs précités. On pourrait aussi prévoir des émetteurs et des récepteurs sur les véhicules 1 pour permettre à leurs cartes mémoires de communiquer entre elles dans une phase d'approche entre deux véhicules et dans leur phase d'imbrication et aussi lors de leur dégagement.

En regard de la figure 1, le premier véhicule parqué est le véhicule 1c disposé en tête. Lorsque le second véhicule 1b approche de l'arrière du premier véhicule 1c, la séquence d'imbrication peut être lancée telle que précitée. Le plancher 5 de premier véhicule 1c est affaissé et le pavillon 11c et le hayon 10c dudit premier véhicule 1c sont en positions relevées ; le train avant 13 du second véhicule 1b à ses roues avant 14, 15 rabattues, la partie avant 2b du second véhicule 1b étant insérée dans l'habitacle 12 en partie arrière 3c du premier véhicule 1c. Lorsqu'un troisième véhicule 1a se présente derrière le second véhicule 1b, le plancher 5 dudit second véhicule 1b est également affaissé et son pavillon 11b et son hayon 10b sont également relevés pour évaser son habitacle 12 et permettre l'engagement de la pièce de guidage 34 du troisième véhicule 1a dans le rail de guidage 35 du second véhicule 1b, puis le rabattement des roues avant 14, 15 du troisième véhicule 1a et, enfin, l'insertion de la partie avant 2a dudit troisième véhicule 1a dans l'habitacle 12 en partie arrière 3b du second véhicule 1b. Le troisième véhicule 1a étant en queue des véhicules 1a, 1b, 1c parqués, celui-ci à son pavillon 11a et son hayon 10a qui demeurent fermés, le temps qu'un autre véhicule 1 approche pour entamer une phase d'imbrication avec ledit troisième véhicule 1a.

Lorsqu'un conducteur souhaite disposer d'un véhicule, celui-ci peut utiliser le véhicule 1a disposé en queue des véhicules parqués, le dégagement se faisant alors par une procédure inverse à celle de l'imbrication telle que précitée. En variante, il est possible également de prévoir un dégagement du véhicule 1c disposé en tête de la file de véhicules 1a, 1b, 1c parqués, dans quel cas le véhicule 1c de tête est dégagé en trois phases. D'abord, les roues arrière 20, 21 du véhicule 1c de tête sont actionnées par les moteurs 22, 23 pour le faire avancer jusqu'à ce que la pièce de guidage 34 du véhicule 1b disposé juste derrière soit positionnée à l'extrémité arrière du rail de guidage 35 dudit véhicule 1c de tête. Cela permet ensuite de déployer les roues avant 14, 15 du véhicule 1b de derrière pour que le train avant 13 dudit véhicule 1b reprenne contact avec le sol. Enfin, le véhicule 1c de tête peut être dégagé complètement et son plancher 5 peut être relevé et son pavillon 11 et son hayon 10 peuvent être rabaissés de sorte à fermer l'habitacle 12 dudit véhicule 1c et pouvoir l'utiliser, après avoir remis en position les sièges avant 30, 31 et éventuellement les sièges arrière. Les autres véhicules 1a, 1b restant parqués peuvent ensuite être déplacés simultanément pour faire avancer la file de véhicules 1a, 1b parqués dans la zone de parcage, ledit déplacement se faisant en actionnant simultanément les roues arrière 20, 21 de chacun desdits véhicules 1a, 1b parqués.

Le véhicule 1 est prédisposé à un usage en flotte d'autopartage en libre-service, voire en flotte de véhicules d'une entreprise. Les véhicules 1a, 1b, 1c pourront être imbriqués les uns dans les autres dans des zones de parking spécifiques prévoyant des bornes de rechargement des accumulateurs de ces véhicules parqués. On pourra aussi prévoir sur chaque véhicule 1 un bras de connexion coopérant avec un bornier de connexion spécifique agencé sur la zone de parking, afin d'assurer le rechargement électrique des véhicules parqués. Ces zones de parking pourront être conçues pour permettre soit au véhicule 1a de queue dans la file de véhicules 1a, 1b, 1c parqués d'être le premier véhicule à être dégagé pour être utilisé, soit au véhicule 1c de tête dans la file de véhicules 1a, 1b, 1c parqués d'être le premier à être dégagé pour être utilisé, en reproduisant les étapes de dégagement du véhicule décrites ci-dessus.

Des variantes peuvent être envisagées dans le cadre de l'invention. Dans l'exemple décrit ci-avant, la pièce de guidage 34 a une forme en T inversé et le rail de guidage a une forme en T complémentaire, permettant un coulissement de la pièce de guidage 34 dans un rail de guidage 35. On pourrait prévoir une pièce de guidage 34 avec un galet de roulement et un rail de guidage 35 en forme de gouttière dans laquelle roule ledit galet de roulement. On pourrait aussi prévoir plus d'une pièce de guidage 34 et autant de rail de guidage 35, par exemple deux pièces de guidage 34 s'engageant respectivement dans deux rails de guidage 35 du véhicule précédent.

## Revendications

1. Véhicule (1) automobile électrique, lequel comprend :
- une partie avant (2) et une partie arrière (3), la partie avant étant fuselée par rapport à la partie arrière ;
- un châssis (4) sur lequel sont montés un plancher (5) et une carrosserie (6) munie d'un pavillon (11) et d'un hayon (10), le plancher et la carrosserie définissant un habitacle (12);
- un train avant (13) agencé sur le châssis dans la partie avant du véhicule et comprenant au moins une roue directionnelle (14, 15) ;
- un train arrière agencé sur le châssis dans la partie arrière du véhicule et comprenant deux roues motrices (20, 21) disposées sur les côtés latéraux du châssis,
**caractérisé en ce que** :
- le train avant (13) comprend un dispositif de rabattement (16) de l'au moins une roue directionnelle de sorte à réduire l'encombrement de la partie avant (2) du véhicule,
- la partie arrière (3) du véhicule comprend un dispositif d'ouverture configuré pour relever le hayon (10) et le pavillon (11) de sorte à accéder à l'arrière de l'habitacle (12) tout en évasant celui-ci,
- ledit véhicule (1) comprend au moins une pièce de guidage (34) agencée sous l'extrémité avant du châssis (4) et au moins un rail de guidage (35) agencé sur le plancher (5) dans ladite partie arrière (3), de sorte à permettre l'insertion de la partie avant (2a, 2b) d'un premier véhicule (1a, 1b) ayant sa au moins une roue directionnelle (14, 15) en position rabattue, à l'intérieur de la partie arrière (3b, 3c) d'un second véhicule (1b, 1c) précédant le premier véhicule (1a, 1b) et ayant son habitacle (12) ouvert et évasé, et le guidage de l'au moins une pièce de guidage (34) du premier véhicule (1a, 1b) dans l'au moins un rail de guidage (35) du second véhicule (1b, 1c) durant ladite insertion.

2. Véhicule (1) selon la revendication 1, dans lequel le dispositif d'ouverture comprend :
- un premier système de pivotement agencé sur la carrosserie (6) au niveau d'un bord avant (111) du pavillon (11) de sorte à pouvoir incliner vers le haut ledit pavillon (11) en relevant son bord arrière (112) ;
- un second système de pivotement agencé entre le bord arrière (112) du pavillon (11) et un bord avant (101) du hayon (10) de sorte à pouvoir incliner vers le haut ledit hayon (10) en relevant son bord arrière (102).

3. Véhicule (1) selon la revendication 2, dans lequel le dispositif d'ouverture comprend aussi un système d'actionnement configuré pour faire pivoter le hayon (10) et le pavillon (11) dans leurs positions relevées permettant l'accès à l'arrière de l'habitacle (12) et son évasement et, inversement, dans leurs positions abaissées permettant la fermeture de l'habitacle.

4. Véhicule (1) selon l'une quelconque des revendications 2 ou 3, dans lequel le dispositif d'ouverture comprend des moyens d'étanchéité (27, 28) configurés pour protéger l'habitacle (12) vis-à-vis de l'environnement externe lorsque le pavillon (11) est incliné vers le haut.

5. Véhicule (1) selon l'une quelconque des revendications 1 à 4, lequel comprend deux rétroviseurs (29) agencés sur les côtés latéraux dudit véhicule, chacun des rétroviseurs étant équipé d'un dispositif de rabattement du rétroviseur contre la carrosserie (6).

6. Véhicule (1) selon l'une quelconque des revendications 1 à 5, lequel comprend au moins un siège avant (30, 31) et des premiers moyens d'escamotage de l'au moins un siège avant.

7. Véhicule (1) selon la revendication 6, lequel comprend un tableau de bord (32), les premiers moyens d'escamotage comprenant un dispositif de déplacement de l'au moins un siège avant (30, 31) sous le tableau de bord.

8. Véhicule (1) selon la revendication 6, dans lequel le plancher (5) comprend un double-fond, les premiers moyens d'escamotage comprenant un dispositif de rabattement de l'au moins un siège avant (30, 31) à l'intérieur du double-fond du plancher.

9. Véhicule (1) selon l'une quelconque des revendications 6 à 8, lequel comprend au moins un siège arrière et des seconds moyens d'escamotage de l'au moins un siège arrière.

10. Véhicule (1) selon la revendication 9, dans lequel le plancher (5) comprend un double-fond, les seconds moyens d'escamotage comprenant un dispositif de rabattement de l'au moins un siège arrière à l'intérieur du double-fond du plancher.

11. Véhicule (1) selon l'une quelconque des revendications 1 à 10, lequel comprend un dispositif d'affaissement du plancher (5) dans la partie arrière (3) dudit véhicule (1) de sorte à participer à l'évasement de l'arrière de l'habitacle (12) ouvert et évasé.

12. Véhicule (1) selon l'une quelconque des revendications 1 à 11, lequel comprend un premier dispositif de détection agencé sur la pièce de guidage (34) de sorte à détecter l'engagement de ladite pièce de guidage sur un rail de guidage (35) d'un véhicule précédent (1b, 1c).

13. Véhicule (1) selon l'une quelconque des revendications 1 à 12, lequel comprend un second dispositif de détection configuré pour détecter l'approche entre deux véhicules successifs (1a, 1b, 1c).

14. Véhicule (1) selon l'une quelconque des revendications 1 à 13, lequel comprend un système d'activation configuré pour générer une séquence d'imbrication ou de dégagement entre deux véhicules consécutifs (1a, 1b, 1c).

## Patentansprüche

1. Elektrisches Kraftfahrzeug (1), welches umfasst:
- einen vorderen Teil (2) und einen hinteren Teil (3), wobei der vordere Teil in Bezug auf den hinteren Teil verjüngt ist;
- ein Fahrgestell (4), auf dem ein Boden (5) und eine Karosserie (6) montiert sind, die mit einem Dach (11) und einer Heckklappe (10) versehen ist, wobei der Boden und die Karosserie einen Fahrgastraum (12) definieren;
- eine Vorderachse (13), die auf dem Fahrgestell in dem vorderen Teil des Fahrzeugs angeordnet ist, und mindestens ein lenkbares Rad (14, 15) umfasst;
- eine Hinterachse, die auf dem Fahrgestell in dem hinteren Teil des Fahrzeugs angeordnet ist, und zwei Antriebsräder (20, 21) umfasst, die an den lateralen Seiten des Fahrgestells angeordnet sind,
**dadurch gekennzeichnet, dass**:
- die Vorderachse (13) eine Vorrichtung zum Umklappen (16) des mindestens einen lenkbaren Rades umfasst, um den Raumbedarf des vorderen Teils (2) des Fahrzeugs zu verringern,
- der hintere Teil (3) des Fahrzeugs eine Öffnungsvorrichtung umfasst, die konfiguriert ist, um die Heckklappe (10) und das Dach (11) derart hochzuziehen, um zum hinteren Teil des Fahrgastraumes (12) zu gelangen, indem man diesen erweitert,
- das Fahrzeug (1) mindestens ein Führungsteil (34), das unter dem vorderen Ende des Fahrgestells (4) angeordnet ist, und mindestens eine Führungsschiene (35) umfasst, die auf dem Boden (5) in dem hinteren Teil (3) angeordnet ist, um die Einführung des vorderen Teils (2a, 2b) eines ersten Fahrzeugs (1a, 1b), welches sein mindestens ein lenkbares Rad (14, 15) in der umgeklappten Position aufweist, ins Innere des hinteren Teils (3b, 3c) eines zweiten Fahrzeugs (1b, 1c) zu erlauben, das dem ersten Fahrzeug (1a, 1b) vorangeht, und seinen Fahrgastraum (12) offen und erweitert aufweist, und das Führen des mindestens einen Führungsteils (34) des ersten Fahrzeugs (1a, 1b) in der mindestens einen Führungsschiene (35) des zweiten Fahrzeugs (1b, 1c) während der Einführung.

2. Fahrzeug (1) nach Anspruch 1, wobei die Öffnungsvorrichtung umfasst:
- ein erstes Schwenksystem, das auf der Karosserie (6) im Bereich eines vorderen Randes (111) des Daches (11) derart angeordnet ist, um das Dach (11) nach oben zu neigen, indem man dessen hinteren Rand (112) anhebt;
- ein zweites Schwenksystem, das zwischen dem hinteren Rand (112) des Daches (11) und einem vorderen Rand (101) der Heckklappe (10) derart angeordnet ist, um die Heckklappe (10) nach oben neigen zu können, indem man deren hinteren Rand (102) anhebt.

3. Fahrzeug (1) nach Anspruch 2, wobei die Öffnungsvorrichtung auch ein Betätigungssystem umfasst, das konfiguriert ist, um die Heckklappe (10) und das Dach (11) in deren angehobene Positionen schwenken zu lassen, wodurch der Zugang zu der Rückseite des Fahrgastraumes (12) und dessen Erweiterung und, umgekehrt, in deren abgesenkte Positionen zu erlauben, die das Schließen des Fahrgastraumes erlauben.

4. Fahrzeug (1) nach einem der Ansprüche 2 oder 3, wobei die Öffnungsvorrichtung Dichtungsmittel (27, 28) umfasst, die konfiguriert sind, um den Fahrgastraum (12) gegenüber der äußeren Umgebung zu schützen, wenn das Dach (11) nach oben geneigt ist.

5. Fahrzeug (1) nach einem der Ansprüche 1 bis 4, welches zwei Rückspiegel (29) umfasst, die an den lateralen Seiten des Fahrzeugs angeordnet sind, wobei jeder der Rückspiegel mit einer Vorrichtung zum Umklappen des Rückspiegels an die Karosserie (6) ausgestattet ist.

6. Fahrzeug (1) nach einem der Ansprüche 1 bis 5, welches mindestens einen Vordersitz (30, 31) und erste Versenkungsmittel des mindestens einen Vordersitzes umfasst.

7. Fahrzeug (1) nach Anspruch 6, welches ein Armaturenbrett (32) umfasst, wobei die ersten Versenkungsmittel eine Verschiebevorrichtung des mindestens einen Vordersitzes (30, 31) unter das Armaturenbrett umfassen.

8. Fahrzeug (1) nach Anspruch 6, wobei der Boden (5) eine doppelten Bodenplatte umfasst, wobei die ersten Versenkungsmittel eine Vorrichtung zum Umklappen des mindestens einen Vordersitzes (30, 31) ins Innere der doppelten Bodenplatte umfassen.

9. Fahrzeug (1) nach einem der Ansprüche 6 bis 8, welches mindestens einen Rücksitz und zweite Versenkungsmittel des mindestens einen Rücksitzes umfasst.

10. Fahrzeug (1) nach Anspruch 9, wobei der Boden (5) eine doppelte Bodenplatte umfasst, wobei die zweiten Versenkungsmittel eine Vorrichtung zum Umklappen des mindestens einen Rücksitzes ins Innere der doppelten Bodenplatte des Bodens umfassen.

11. Fahrzeug (1) nach einem der Ansprüche 1 bis 10, welches eine Absenkungsvorrichtung des Bodens (5) im hinteren Teil (3) des Fahrzeugs (1) umfasst, um sich an der Erweiterung der Rückseite des offenen oder erweiterten Fahrgastraumes (12) zu beteiligen.

12. Fahrzeug (1) nach einem der Ansprüche 1 bis 11, welches eine erste Erkennungsvorrichtung umfasst, die derart auf dem Führungsteil (34) angeordnet ist, um die Einführung des Führungsteils auf einer Führungsschiene (35) eines vorherigen Fahrzeugs (1b, 1c) zu erkennen.

13. Fahrzeug (1) nach einem der Ansprüche 1 bis 12, welches eine zweite Erkennungsvorrichtung umfasst, die konfiguriert ist, um die Annäherung zwischen zwei aufeinanderfolgenden Fahrzeugen (1a, 1b, 1c) zu erkennen.

14. Fahrzeug (1) nach einem der Ansprüche 1 à 13, welches ein Aktivierungssystem umfasst, das konfiguriert ist, um eine Verschachtelungs- oder Freigabesequenz zwischen zwei aufeinanderfolgenden Fahrzeugen (1a, 1b, 1c) zu generieren.

## Claims

1. An electric automotive vehicle (1), which comprises:
- a front part (2) and a rear part (3), the front part being tapered with respect to the rear part;
- a chassis (4) to which a floor (5) and a body (6) provided with a roof (11) and a tailgate (10) are mounted, the floor and the body defining a passenger compartment (12);
- a front axle (13) arranged on the chassis in the front part of the vehicle and comprising at least one steerable wheel (14, 15);
- a rear axle arranged on the chassis in the rear part of the vehicle and comprising two drive wheels (20, 21) disposed on the lateral sides of the chassis,
**characterised in that**:
- the front axle (13) comprises a folding device (16) for the at least one steerable wheel so as to reduce the overall space of the front part (2) of the vehicle,
- the rear part (3) of the vehicle comprises an opening device configured to raise the tailgate (10) and the roof (11) so as to gain access to the rear of the passenger compartment (12) while flaring it,
- said vehicle (1) comprises at least one guide piece (34) arranged under the front end of the chassis (4) and at least one guide rail (35) arranged on the floor (5) in said rear part (3), so as to allow insertion of the front part (2a, 2b) of a first vehicle (1a, 1b) having its at least one steerable wheel (14, 15) in the folded position, inside the rear part (3b, 3c) of a second vehicle (1b, 1c) preceding the first vehicle (1a, (1b) and having its passenger compartment (12) open and flared, and guiding the at least one guide part (34) of the first vehicle (1a, 1b) into the at least one guide rail (35) of the second vehicle (1b, 1c) during said insertion.

2. The vehicle (1) according to claim 1, wherein the opening device comprises:
- a first pivoting system arranged on the body (6) at a front edge (111) of the roof (11) so as to be able to tilt said roof (11) upwardly by raising its rear edge (112);
- a second pivoting system arranged between the rear edge (112) of the roof (11) and a front edge (101) of the tailgate (10) so as to be able to tilt said tailgate (10) upwardly by raising its rear edge (102).

3. The vehicle (1) according to claim 2, wherein the opening device also comprises an actuation system configured to pivot the tailgate (10) and the roof (11) into their raised positions allowing access to and flaring of the rear of the passenger compartment (12) and, conversely, into their lowered positions allowing closure of the passenger compartment.

4. The vehicle (1) according to any of claims 2 or 3, wherein the opening device comprises sealing means (27, 28) configured to protect the passenger compartment (12) from the external environment when the roof (11) is tilted upwardly.

5. The vehicle (1) according to any of claims 1 to 4, which comprises two rear-view mirrors (29) arranged on the lateral sides of said vehicle, each of the rear-view mirrors being equipped with a device for folding the mirror against the body (6).

6. The vehicle (1) according to any of claims 1 to 5, which comprises at least one front seat (30, 31) and first means for retracting the at least one front seat.

7. The vehicle (1) according to claim 6, which comprises a dashboard (32), the first retracting means comprising a device for moving the at least one front seat (30, 31) under the dashboard.

8. The vehicle (1) according to claim 6, wherein the floor (5) comprises a double bottom, the first folding means comprising a device for folding the at least one front seat (30, 31) into the double bottom of the floor.

9. The vehicle (1) according to any of claims 6 to 8, which comprises at least one rear seat and second means for retracting the at least one rear seat.

10. The vehicle (1) according to claim 9, wherein the floor (5) comprises a double bottom, the second folding means comprising a device for folding the at least one rear seat into the double bottom of the floor.

11. The vehicle (1) according to any of claims 1 to 10, which comprises a floor sagging device (5) in the rear part (3) of said vehicle (1) so as to participate in flaring the open and flared rear of the passenger compartment (12).

12. The vehicle (1) according to any of claims 1 to 11, which comprises a first detection device arranged on the guide member (34) so as to detect engagement of said guide member with a guide rail (35) of a preceding vehicle (1b, 1c).

13. The vehicle (1) according to any of claims 1 to 12, which comprises a second detection device configured to detect approach between two successive vehicles (1a, 1b, 1c).

14. The vehicle (1) according to any of claims 1 to 13, which comprises an activation system configured to generate a nesting or disengagement sequence between two consecutive vehicles (1a, 1b, 1c).
